# FASCICULE DE BREVET EUROPEEN

(11) **EP 0 555 163 B1**
(45) Date de publication et mention de la délivrance du brevet: **26.04.1995**
(21) Numéro de dépôt: 93420049.4
(22) Date de dépôt: 03.02.1993
(51) Int. Cl.: C01F 7/47, C01F 7/06

(54) **Procédé d'élimination de l'oxalate de sodium des solutions d'aluminate de sodium du cycle bayer**
Verfahren zur Entfernung von Natriumoxalat aus Natriumaluminatlösungen von dem Bayerzyklus
Process for removal of sodium oxalate from sodium aluminate solutions originating from the Bayer-Cycle

(30) Priorité: 05.02.1992 FR 9201481
(43) Date de publication de la demande: 11.08.1993
(73) Titulaire: ALUMINIUM PECHINEY, 92400 Courbevoie (FR)
(72) Inventeur: Cristol, Benoit, F-13100 Aix-en-Provence (FR); Perret, Yves Michel, F-13120 Gardanne (FR)
(74) Mandataire: Mougeot, Jean-Claude

(56) Documents cités:
- EP-A- 0 173 630
- DE-A- 2 415 872

## Description

### DOMAINE TECHNIQUE

L'invention concerne un procédé d'élimination de l'oxalate de sodium contenu dans les solutions d'aluminate de sodium résultant de l'attaque alcaline des bauxites selon le procédé Bayer.

### ETAT DE LA TECHNIQUE

Le procédé Bayer, largement décrit dans la littérature spécialisée, constitue la technique essentielle de production de l'alumine destinée à être transformée en aluminium par électrolyse ignée. Selon ce procédé, le minerai de bauxite est traité à chaud au moyen d'une solution aqueuse d'hydroxyde de sodium, à concentration appropriée, provoquant ainsi la solubilisation de l'alumine et l'obtention d'une solution sursaturée d'aluminate de sodium. Après séparation de la phase solide constituant le résidu inattaqué (boues rouges) du minerai, la solution sursaturée d'aluminate de sodium, appelée aussi liqueur Bayer, est décomposée par ensemencement avec des particules de trihydroxyde d'aluminium dans le but de provoquer la précipitation sous forme de trihydroxyde d'aluminium de l'aluminium en solution. La liqueur d'aluminate de sodium appauvrie en alumine est alors recyclée à l'étape de l'attaque après avoir été concentrée et rechargée en hydroxyde de sodium pour rétablir la concentration appropriée à l'attaque du minerai. Mais, en même temps que l'alumine de la bauxite est dissoute à l'état d'aluminate de sodium, la solution d'aluminate de sodium sursaturée issue de l'attaque se charge progressivement de composés organiques produits de la décomposition plus ou moins complète des matières humiques contenues dans le minerai. Ces composés organiques dégradés sous forme de sels organiques de sodium et principalement sous forme d'oxalate de sodium s'avèrent très gênants. En particulier, les inconvénients associés à l'accumulation de l'oxalate de sodium dans les liqueurs Bayer, résultent du fait que ledit oxalate, atteignant son niveau critique de sursaturation, précipite sous forme de fines aiguilles sur l'amorce d'hydroxyde d'aluminium. Les fines aiguilles d'oxalate de sodium agissent aussi comme de véritables germes pour la précipitation de l'hydroxyde d'aluminium en provoquant une augmentation du nombre des fines particules qui deviennent ainsi trop nombreuses pour être efficacement contrôlées pendant la décomposition de l'aluminate de sodium.

Ainsi, la précipitation de l'oxalate de sodium affecte les qualités physico-chimiques du trihydroxyde d'aluminium précipité et conduit notamment à de grandes variations de la granulométrie de l'alumine produite ainsi qu'à une fragilité accrue des grains qui peuvent représenter des inconvénients majeurs pour l'utilisation de cette alumine dans la production de l'aluminium par électrolyse.

Dès lors, il se révèle nécessaire dans les opérations industrielles de production de l'alumine, de contrôler ou mieux d'éviter la contamination de l'amorce de trihydroxyde d'aluminium pendant l'étape de décomposition par de l'oxalate de sodium précipité.

Divers procédés ont été proposés pour limiter la présence d'oxalate de sodium en solution dans les liqueurs Bayer.

Les procédés visant à détruire ou décomposer directement les matières humiques contenues dans le minerai, par exemple par grillage, sont peu utilisés industriellement en raison de leur coût prohibitif.

Avec un objectif similaire d'éliminer les matières humiques contenues dans la liqueur d'aluminate de sodium lors de la fabrication d'alumine selon le procédé Bayer, le document DE 2415872A décrit un procédé permettant de réduire la teneur en composés organiques, notamment en matières humiques, par ajout à une température inférieure au point d'ébullition à la pression atmosphérique et de préférence entre 70 et 90°C d'un composé telle que la chaux susceptible de libérer en se dissociant des ions calcium qui précipitent sous forme de composés calciques peu solubles, les dérivés sodés des acides humiques en solution. Ce document indique sans autre précision qu'une partie des composés organiques à poids moléculaires inférieurs, comme les oxalates, se trouve également éliminée.

Plus connus sont les procédés qui consistent à agir sur les produits de décomposition de la liqueur sursaturée par lavage du trihydroxyde d'aluminium destiné à la production ou d'une partie du trihydroxyde d'aluminium recyclé comme amorce à l'étape de décomposition. On élimine ainsi sélectivement l'oxalate de sodium dilué dans les eaux de lavage par précipitation à la chaux et formation de l'oxalate de calcium. Toutefois, de tels procédés ne permettent pas de conduire l'étape de précipitation du trihydroxyde d'aluminium dans les meilleures conditions de productivité. Par ailleurs, une contamination trop importante par dépôt d'oxalate sur les grains de trihydroxyde d'aluminium peut provoquer une fragilisation de ces grains qui se manifeste au stade de la calcination lors de la décomposition thermique de l'oxalate emprisonné dans l'édifice cristallin.

Pour éviter ces inconvénients il devient nécessaire de maintenir la concentration en oxalate de sodium dans la liqueur d'aluminate de sodium, au cours de la décomposition, à une valeur inférieure à sa concentration critique de sursaturation ; et cela sans réduire le taux de matières humiques en solution dont l'effet stabilisant sur la liqueur est maintenant bien connu par le fait qu'il permet de régler le seuil critique de sursaturation de l'oxalate de sodium en solution.

Plusieurs procédés ont été proposés pour limiter la quantité d'oxalate de sodium en solution dans les liqueurs Bayer. Pour cela on provoque régulièrement sur une fraction ou sur la totalité de la liqueur décomposée, mais déjà sursaturée en oxalate de sodium, une déstabilisation de la sursaturation pour précipiter et séparer spécifiquement l'oxalate de sodium de la liqueur alors désaturée.

Ainsi, le procédé décrit dans le brevet USP 3899571 (EP-A-0013407) consiste à traiter une liqueur Bayer sursaturée par rapport à la solubilité à l'équilibre d'oxalate de sodium (telles que les liqueurs appauvries en aluminate de sodium issues de la décomposition, reconcentrées ou non) par introduction d'une amorce d'oxalate de sodium recyclée pour provoquer la précipitation de l'oxalate de sodium en solution et aboutir à la concentration de l'équilibre de solubilité de l'oxalate de sodium anhydre. Après une séparation solide-liquide facilitée par l'emploi d'un adjuvant de filtration, la liqueur épurée est alors réintroduite dans le cycle Bayer tandis qu'une fraction de la phase solide d'oxalate de sodium est utilisée pour la préparation de la suspension de cristaux d'amorce, l'autre fraction étant éliminée du cycle.

Bien que ce procédé d'amorçage s'avère efficace pour provoquer la précipitation de l'oxalate de sodium, il présente des inconvénients lors de son application industrielle. En effet, les cristaux d'oxalate de sodium constituant l'amorce deviennent assez rapidement inactifs par empoisonnement de leur surface par les matières organiques présentes et il convient alors de procéder à un lavage de cette amorce dont la réalisation est très délicate. Dans le cas où le lavage se révèle insuffisant, il apparaît une baisse d'activité de l'amorce et dès lors une diminution du rendement de précipitation de l'oxalate de sodium. Dans le cas où le lavage est trop poussé, il se manifeste un affinement granulométrique de l'amorce, qui conduit à des séparations liquide-solide très difficiles et dès lors à des baisses de rendement de purification.

Au lieu de réaliser la déstabilisation de la liqueur Bayer sursaturée en oxalate de sodium par une amorce d' oxalate de sodium le brevet US 4597952 (EP-A-0173630) préconise l'emploi d'amorces d'oxalate de calcium ou d'oxalate de baryum dont le mode d'action conduit indirectement au même résultat. En effet l'oxalate de calcium ou de baryum, instables dans la liqueur Bayer fortement alcaline, libèrent l'ion oxalate pour former de l'oxalate de sodium qui contribue à augmenter la concentration de l'oxalate de sodium en solution au-delà du seuil critique de sursaturation, provoquant ainsi la précipitation de l'oxalate de sodium. La teneur en oxalate dissous est ainsi ramenée à la limite de solubilité de l'oxalate dans les conditions de l'expérimentation, fonction notamment de la température de la liqueur et de la concentration en hydroxyde de sodium dans la liqueur.

Ce procédé conduit également à l'obtention de précipités d'oxalate de sodium finement dispersés dans la liqueur Bayer et donc difficiles à séparer par décantation et/ou filtration sans l'aide d'adjuvants. De même le recyclage d'amorce est nécessaire et une partie de l'oxalate de sodium précipité doit donc être recyclé pour régénérer l'amorce d'oxalate de calcium ou de baryum après élimination des matières organiques entraînées. Cette régénération est effectuée en remettant au moins partiellement en solution aqueuse l'oxalate de sodium précipité, et en traitant la suspension obtenue au moyen de chaux (CaO) ou d'aluminate de baryum (Al₂O₄Ba). Ce traitement conduit à l'obtention d'un précipité d'oxalate de calcium ou d'oxalate de baryum qui est recyclé à la précipitation de l'oxalate de sodium.

### PROBLEME POSE

C'est donc dans le but de s'affranchir du double problème de la séparation des fins précipités d'oxalate de sodium dans la liqueur Bayer et du recyclage des amorces d'oxalate, tout en conservant l'efficacité et notamment la sélectivité des procédés de précipitation d'oxalate de sodium par ajout d'amorce d'oxalates, que la demanderesse a étudié et mis au point le procédé objet de l'invention.

### OBJET DE L'INVENTION

L'invention repose en effet sur le constat qu'il est possible, à partir d'une amorce hétérogène à base de chaux finement divisée, de provoquer une précipitation importante d'oxalate de sodium dans la liqueur Bayer sous forme d'un précipité aisément séparable par filtration, sans l'apport d'adjuvant de filtration.

Pour précipiter sélectivement l'oxalate de sodium sans entraîner de matières humiques et ainsi ne pas modifier de façon aléatoire le seuil de sursaturation critique de l'oxalate de sodium dans la liqueur Bayer ainsi que les propriétés de filtrabilité de cette liqueur, il convient de respecter des conditions opératoires bien définies notamment en ce qui concerne la température à laquelle s'effectue cette précipitation dans la liqueur.

Plus précisément, l'invention concerne un procédé d'élimination de l'oxalate de sodium dans au moins une fraction de la solution ou liqueur d'aluminate de sodium prélevée dans le cycle Bayer de production d'alumine à partir de bauxite après les étapes de décomposition et de concentration de ladite liqueur destinée à être recyclée comme liqueur alcaline d'attaque du minerai de bauxite, comportant la précipitation de l'oxalate de sodium dissous, au moyen d'un agent de déstabilisation de l'état de sursaturation de l'oxalate de sodium, puis la séparation par filtration de l'oxalate de sodium ainsi précipité caractérisé en ce que l'agent de déstabilisation de l'état de sursaturation de l'oxalate de sodium, faisant également office d'adjuvant de filtration, mis en contact pendant plus de 1 heure avec la solution d'aluminate de sodium refroidie entre 40° C et 60°C est à base de chaux finement divisée. Cette chaux est éventuellement additionnée de magnésie dans une proportion n'excédant pas 40% en poids du mélange ainsi formé.

Il s'est avéré en effet de façon surprenante que la chaux employée parfois comme adjuvant de filtration pour faciliter la séparation des certaines impuretés solides de la liqueur Bayer, pouvait se substituer très efficacement entre 40° C et 60° C aux amorces d'oxalates de sodium, baryum ou calcium préconisées par l'art antérieur. En raison du caractère très fortement alcalin de la liqueur Bayer après décomposition et concentration et jusqu'à 60° C, il ne peut y avoir de combinaison de la chaux avec les éléments en solution dans la liqueur, en particulier avec l'ion oxalate C₂O₄-- et les matières humiques qui restent en solution. A noter que la chaux peut être mise en contact avec la solution d'aluminate de sodium sous forme de chaux vive CaO ou sous forme de lait de chaux dont la concentration en CaO est comprise entre 100 et 300 g/litre, mais en aucun cas, l'équilibre de solubilité de l'oxalate de sodium n'est modifié. Il faut admettre que la chaux agit essentiellement comme amorce de précipitation de l'oxalate en solution sursaturée par le seul effet mécanique de contact liqueur/solide qui dans le cas présent est important compte tenu de la grande surface développée par la chaux finement divisée en contact avec la liqueur. A noter toutefois qu'au-delà de 60°C cet effet d'amorçage décroît rapidement et n'est plus perceptible à 70°C.

Parallèlement dans la plage de température 40°C-60°C, on constate, après un temps de contact suffisant pour permettre la précipitation des petits cristaux d'oxalate de sodium en suspension avec les particules de chaux, que la phase solide ainsi obtenue est aisément filtrable. Il s'ensuit, qu'après essorage du gâteau insoluble pour récupérer le maximum de liqueur d'imprégnation, celui-ci ne contient plus de matières valorisables et peut être rejeté en totalité. Ceci à la différence des procédés utilisant une amorce d'oxalate qu'il convient de récupérer au moins en partie et de regénérer par des traitements complexes.

Il faut rappeler également que le seuil critique de sursaturation à partir duquel l'oxalate de sodium précipite spontanément, décroît avec l'abaissement de la température. A moins de 40° C l'on peut craindre des précipitations intempestives de très fines particules d'oxalate de sodium dans les circuits hors des postes prévus à cet effet, ces très fines particules s'avérant par ailleurs très difficiles à filtrer. Si l'augmentation de la concentration en soude caustique de la liqueur (concentration soude libre + soude combiné dans AlO₂Na exprimée en Na₂O g/l) tend aussi à diminuer le seuil critique de sursaturation en oxalate de sodium, celui-ci est surtout influencé par la présence de matières humiques peu dégradées dans la liqueur. Ce seuil étant d'autant plus élevé que la liqueur est chargée en matières organiques on peut conclure aisément que le procédé selon l'invention sera d'autant plus efficace que ce seuil est élevé et donc que la quantité d'oxalate en mesure de précipiter est grande pour un volume de liqueur déterminé. C'est la raison pour laquelle l'invention trouve une de ses meilleurs applications lors du traitement des bauxites tropicales à trihydrate. Ces bauxites à base d'hydragillite et riches en matières humiques, subissent une attaque alcaline à une température généralement
≦ 150°C de sorte que la liqueur d'attaque s'enrichit progressivement en oxalate de sodium, conséquence de la dégradation des matières humiques dans le temps. De ce fait la teneur en oxalate de sodium soluble peut atteindre 0,3 à 0,6% en poids de carbone oxalique rapporté à la soude caustique (soude libre + soude à l'état AlO₂Na) avant d'être ramenée après précipitation selon le procédé de l'invention à des teneurs de 0,15 à 0,25%. On notera encore que, dans le cas de bauxite à monohydrate contenant peu de matières humiques et de surcroît attaquées à haute température (≧ 200°C), le seuil critique de sursaturation n'excède pas 0,15 à 0,25% en poids de carbone oxalique rapporté à la soude caustique du fait de la présence en quantité très réduite dans la liqueur de matières humiques. Ce seuil peut être artificiellement relevé jusqu'à 0,3 ou 0,5% par ajout dans la liqueur, en un point quelconque du cycle Bayer, d'un polyélectrolyte anionique de synthèse tels que polyacrylamide, acide polyacrylique, conformément à l'enseignement du brevet EP 0173630 (US 4597952) au nom de la demanderesse. L'action retardatrice de la précipitation de l'oxalate de sodium par cet agent de synthèse, qui est similaire à celle des matières humiques ou organiques peu dégradées naturellement présentes dans la liqueur Bayer, permet d'appliquer le procédé de la présente invention à toutes les bauxites avec la même efficacité que pour les bauxites tropicales à trihydrate.

D'une manière générale le traitement d'épuration en oxalate de la liqueur Bayer décomposée puis concentrée pour atteindre une concentration en soude caustique exprimée en Na₂O caustique comprise entre 170 et 250 g/litre et une concentration en oxalate de sodium exprimée en carbone oxalique rapportée à la soude caustique comprise entre 0,3 et 0,6% est effectuée seulement sur une fraction représentant de 3 à 20% du volume total de la liqueur après concentration et à une température comprise entre 40 et 60°C, nécessitant donc un refroidissement de cette fraction de liqueur Bayer. La chaux vive dont environ 2% en poids des grains sont inférieurs à 10 microns ou le lait de chaux dont 20% environ des grains sont inférieurs à 10 micromètres ou le lait de chaux dont 20% environ des grains sont inférieurs à 10 micromètres, est introduite régulièrement dans la liqueur refroidie maintenue en agitation pour former une suspension très homogène de chaux à une concentration en CaO comprise entre 2 et 20 g par litre de liqueur. A cet effet, après introduction de chaux la suspension est encore maintenue en agitation pendant plus de 1 heure. La phase solide de la suspension constituée alors d'un mélange de fines particules de chaux et d'oxalate de sodium cristallisé est séparée par décantation et filtration ou filtration directe. A noter que la séparation est relativement aisée puisque l'on peut recueillir au moins 36 kg de gâteau essoré à l'heure par m² de surface filtrante avec une teneur en soude libre exprimée en Na₂O < à 3% du gâteau humide essoré. Après séparation la phase solide sans matière valorisable peut être ajoutée aux boues rouges pour mise au rebut alors que la liqueur, dont la concentration réduite en oxalate de sodium soluble est inférieure à 0,25 % de carbone oxalique rapporté à la soude caustique, est rajoutée à la fraction principale de liqueur non épurée en oxalate pour former une solution fortement alcaline qui est recyclée comme liqueur d'attaque de la bauxite.

### MISE EN OEUVRE DE L'INVENTION

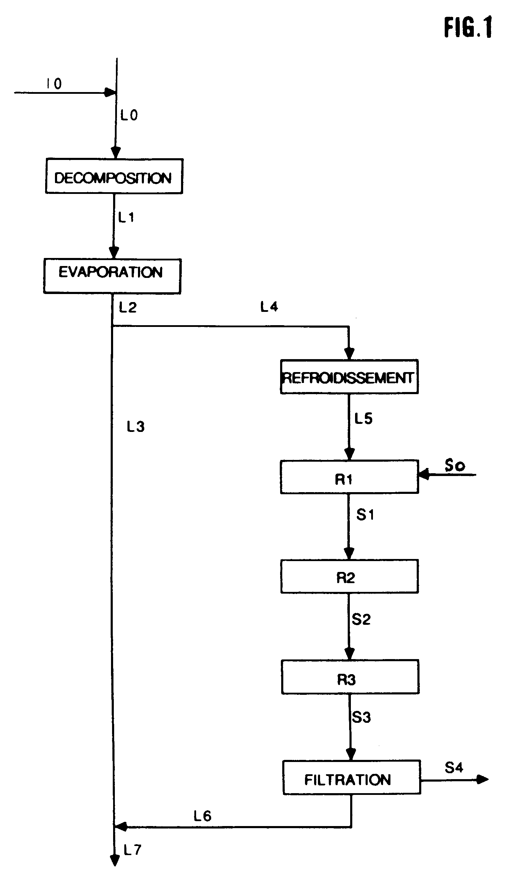

La réalisation de l'invention dans les conditions opératoires préférentielles sera mieux comprise à partir de la description basée sur le schéma général de traitement (Figure 1).

Selon la figure 1 la liqueur Bayer Lo, éventuellement additionnée avant l'étape de décomposition d'un polyélectrolyte anionique lo, par exemple le FLOERGER type AN934SH (marque déposée SNF.FLOERGER) à raison de 20 mg par litre de solution, pour relever si nécessaire le seuil de sursaturation critique en oxalate aux environs de 0,5% de carbone oxalique par rapport à la soude caustique est décomposée et après séparation du trihydroxyde d'aluminium précipité, la liqueur résultante L1 est concentrée par évaporation de sorte que la concentration en soude caustique soit comprise entre 170 et 250 g Na₂O/litre et de préférence entre 190 et 210 g Na₂O/litre.

Une fraction L4 représentant de préférence 4 à 6% du volume de liqueur concentrée L2 est prélevée pour subir le traitement de désoxalatation selon l'invention.
L'importance de la fraction L4 prélevée est déterminée par la quantité d'oxalate de sodium qu'il faut éliminer à chaque cycle pour éviter un enrichissement progressif de la liqueur Bayer en oxalate de sodium et tout risque de précipitation intempestive de cet oxalate sur les grains de trihydroxyde d'aluminium lors de la décomposition. Il faut rappeler que l'enrichissement en oxalate de la liqueur Bayer, plus ou moins rapide selon la nature et l'origine de la bauxite, est causée par le passage en solution des oxalates présents dans le minerai de bauxite lors de l'attaque alcaline mais aussi par la dégradation progressive sous forme d'oxalate de sodium des matières organiques déjà solubilisées dans la liqueur Bayer recyclée.

Après refroidissement à une température comprise entre 40°C et 60°C la liqueur refroidie L5 dont le seuil de sursaturation critique est atteint, voire dépassé, en raison de l'abaissement de température est mise en contact dans un premier réacteur agité R1 avec de la chaux vive finement divisée So pour former une suspension homogène de concentration comprise de préférence entre 7 et 9 g de CaO par litre de liqueur L5.

La suspension S1 ainsi formée est transférée dans un second réacteur agité puis dans un 3ème réacteur agité R3. Le temps total de mise en contact chaux vive-liqueur réalisée dans le cas présent dans les 3 réacteurs en série est de préférence compris entre 3 et 5 heures. La suspension S3 issue du réacteur R3 est filtrée. Cette filtration réalisée sur filtre presse est très rapide, de l'ordre de 1,5 m³/heure de suspension par m² de surface filtrante.

Après filtration et essorage le gâteau d'insolubles S4 dont la teneur en Na₂O libre est inférieure à 3%, est mélangée aux boues rouges pour mise en décharge. La liqueur L6 appauvrie en oxalate de sodium avec une concentration comprise entre 0,15 et 0,25% de carbone oxalique rapporté à la soude caustique est mélangée avec la fraction principale L3 de liqueur non désoxalatée pour former une liqueur alcaline L7 recyclée comme liqueur d'attaque du minerai de bauxite.

### EXEMPLES D'APPLICATION

### Exemple 1

On a traité selon le procédé de l'invention 40 m³/heure de liqueur industrielle L4 prélevée dans le circuit de liqueur décomposée et concentrée L2 dont le débit est de 1000 m³/heure et qui provient essentiellement de l'attaque alcaline à 105°C d'une bauxite tropicale à trihydrate. La liqueur L4 prélevée avait la composition suivante :

| | |
|---|---|
| Na₂O caustique | 200 g/l |
| Na₂O carbonatée | 25 g/l |
| Al₂O₃ | 120 g/l |
| Oxalate de sodium exprimé en C oxalique | 0,90 g/l |
| Taux C oxalique/Na₂O caustique | 0,45% |

Après refroidissement à 40°C, la liqueur refroidie L5 est mélangée à 270 kg de chaux vive additionnée de 30 kg de magnésie dans un premier réacteur agité pour former une suspension homogène de concentration 8 g CaO + MgO/litre. Après 3 heures de mise en contact en réacteur agité la suspension représentant un volume de 40 m³, a été filtrée en moins de 1 heure sur filtre de 30 m². Après essorage le gâteau insoluble humide S4 titrait moins de 3% de soude libre exprimée en Na₂O et la liqueur L6 renvoyée dans le circuit Bayer pour être mélangée avec les 960 m³ de liqueur L3 non désoxalatée et recyclée comme liqueur d'attaque contenait seulement 0,37 g de carbone oxalique par litre, soit C ox/Na₂O caust.= 0,18 %.
Lors de ce traitement (0,88 -0,37) 4.10⁴g, soit environ 20,4 kg de carbone oxalique correspondant à 113,8 kg d'oxalate de sodium cristallisé ont été éliminés au cours du cycle.

### Exemple 2

On a traité dans les conditions de l'exemple 1, 40 m³/heure de liqueur industrielle L4 issue de l'attaque à 250°C d'une bauxite à monohydrate d'origine méditerranéenne. La liqueur L4 dont le seuil de sursaturation critique en oxalate de sodium avait été relevé à 0,68 g/l de carbone oxalique par ajout à raison de 20 mg/ litre de polyéctrolyte anionique Floerger AN 934 SH (marque déposée SNF.FLOERGER), avait la composition suivante:

| | |
|---|---|
| Na₂O caustique | 195 g/l |
| Na₂O carbonatée | 22 g/l |
| Al₂O₃ | 120 g/l |
| oxalate de sodium exprimé en C oxalique: 0,58 g/l correspond à un taux C ox./Na2O caust. de 0,30% sensiblement inférieur au seuil de sursaturation critique de 0,68 g/l correspondant au taux de 0,35% | |

Après filtration en moins de 1 heure et essorage, le gâteau insoluble humide S4 titrait moins de 3% de soude libre exprimée en Na₂O et la liqueur L6 désoxalatée contenait seulement 0,19 g de carbone oxalique par litre, soit un taux C ox/Na₂O caustique de 0,1%.

Lors de ce traitement (0,58 - 0,19) 4.10⁴ g soit environ 15,6 kg de carbone oxalique correspondant à 87 kg d'oxalate de sodium cristallisé ont été éliminés au cours du cycle.

### Exemple 3

On a traité selon le procédé de l'invention 40 m³/heure de liqueur industrielle L4 prélevée dans le circuit de liqueur décomposée et concentrée L2 dont le débit est de 1000 m³/heure et qui provient essentiellement de l'attaque alcaline à 105°C d'une bauxite tropicale à trihydrate. La liqueur L4 prélevée avait la composition suivante :

| | |
|---|---|
| Na₂O caustique | 205 g/l |
| Na₂O carbonatée | 24 g/l |
| Al₂O₃ | 120 g/l |
| Oxalate de sodium exprimé en C oxalique | 0,88 g/l |
| Taux C oxalique/Na₂O caustique | 0,43 %. |

Après refroidissement à 40°C, lal iqueur refroidie L5 est mélangée à 270 kg de chaux vive additionnée de 30 kg de magnésie dans un premier réacteur agité pour former une suspension homogène de concentration 8 g CaO + MgO/litre. Après 3 heures de mise en contact en réacteur agité la suspension représentant un volume de 40 m³, a été filtrée en moins de 1 heure sur filtre de 30 m². Après essorage le gâteau insoluble humide S4 titrait moins de 3% de soude libre exprimée en Na₂O et la liqueur L6 renvoyée dans le circuit Bayer pour être mélangée avec les 960 m³ de liqueur L3 non désoxalatée et recyclée comme liqueur d'attaque contenait seulement 0,37 g de carbone oxalique par litre, soit C ox/Na₂O caust.= 0,18 %.
Lors de ce traitement (0,88 -0,37) 4.10⁴g, soit environ 20,4 kg de carbone oxalique correspondant à 113,8 kg d'oxalate de sodium cristallisé ont été éliminés au cours du cycle.

### Exemple 4

On a traité une deuxième aliquote L4 de la liqueur L2 de l'exemple 3 dans les mêmes conditions de précipitation que celles de l'exemple 3 à l'exception de la température de la liqueur maintenue à 80° C au lieu de 40° C. On a constaté, indépendamment de la moins bonne perméabilité du gâteau insoluble concrétisé par une augmentation des temps de filtration à volume constant (1h10′ pour 40 m³ de liqueur à filtrer) par une diminution non significative du taux d'oxalate de sodium exprimé en C oxalique de 0,88 g/l dans la liqueur initiale à 0,86 g/l dans la liqueur filtrée. En revanche, la teneur en carbone organique contrôlée à 7,2 g/l dans la liqueur initiale est ramenée à 5,3 g/l dans la liqueur filtrée confirmant une épuration partielle en matières humiques ou organiques faiblement dégradées, précipitées ou insolubilisées vraisemblabement par le mélange chaux magnésie. Il se confirme donc que dans ces conditions l'addition d'amorce à base de chaux est sans effet sur la teneur en oxalate de la liqueur.

### Exemple 5

On a traité une troisième aliquote L4 de la liqueur L2 de l'exemple 3 dans les mêmes conditions de précipitation que celles de l'exemple 3 à l'exception de la température maintenue à 60° C et de la composition des 300 kg d'agent stabilisant consitué dans le cas présent par le mélange de 180 kg CaO et de 120 kg MgO (60 %/40% en poids). L'on a constaté une bonne filtrabilité du gâteau insoluble comme dans l'exemple 3 ainsi qu'une diminution significative de la teneur de 0,88 g/l à 0,39 g/l correspondant à Coxal/Na₂o caust. = 0,19 % et à l'élimination au cours d'un cycle de traitement sur 40 m³ de liqueur à l'élimination de (0,88 - 0,39) 4.10⁴ g soit environ 19,6 kg de carbone oxalique correspondant à 109,4 kg d'oxalate de sodium cristallisé.

Parallèlement, on constate une légère diminution de la teneur en carbone organique de 7,2 g/l dans la liqueur initiale à 6,7 g dans la liqueur filtrée après desoxalatation, laissant supposer que l'on commence à insolubiliser ds matières humiques ou organiques faiblement dégradées.

## Revendications

1. Procédé d'élimination de l'oxalate de sodium dans au moins une fraction de la solution ou liqueur d'aluminace de sodium prélevée dans le cycle Bayer de production d'alumine à partir de bauxite, après les étapes de décomposition et de concentration de ladite liqueur destinée à être recyclée comme liqueur alcaline d'attaque du minerai de bauxite, comportant la précipitation de l'oxalate de sodium dissous au moyen d'un agent de déstabilisation de l'état de sursaturation de l'oxalate de sodium, puis la séparation par filtration de l'oxalate de sodium ainsi précipité caractérisé en ce que l'agent de déstabilisation de l'état de sursaturation de l'oxalate de sodium, faisant également office d'adjuvant de filtration, mis en contact pendant plus de 1 heure avec la solution d'aluminate de sodium refroidie entre 40°C et 60°C est à base de chaux finement divisée.

2. Procédé selon la revendication 1 caractérisé en ce que l'agent de déstabilisation est de la chaux additionnée de magnésie dans une proportion n'excédant pas 40% en poids du mélange ainsi formé.

3. Procédé selon la revendication 1 caractérisé en ce que l'agent de déstabilisation est de la chaux vive.

4. Procédé selon la revendication 1 caractérisé en ce que l'agent de déstabilisation est un lait de chaux dont la concentration en CaO est comprise entre 100 et 300 g/litre.

5. Procédé selon la revendication 1 caractérisé en ce que la solution ou liqueur d'aluminate de sodium, prélevée après décomposition et concentration, a une concentration en soude caustique exprimée en Na₂O comprise entre 170 et 250 g/l.

6. Procédé selon la revendication 5 caractérisé en ce que la solution d'aluminate de sodium prélevée après décomposition et concentration a une concentration en soude caustique exprimée en Na₂O comprise entre 190 et 210 g/litre.

7. Procédé selon la revendication 1 ou 6 caractérisé en ce que la solution ou liqueur d'aluminate de sodium prélevée après décomposition et concentration, a un taux d'oxalate de sodium exprimé par le rapport pondéral carbone oxalique/Na₂O caustique compris entre 0,3% et 0,6%.

8. Procédé selon l'une quelconque des revendications 1,5,6,7 caractérisé en ce que la fraction de liqueur concentrée prélevée représente de 3 à 20% du volume total de liqueur concentrée.

9. Procédé selon la revendication 8, caractérisé en ce que la fraction de liqueur concentrée prélevée représente de 4 à 6% du volume total de liqueur concentrée.

10. Procédé selon l'une quelconque des revendications 1 à 9 caractérisé en ce que la suspension homogène de chaux dans la liqueur refroidie a une concentration comprise entre 2 et 20 g.

11. Procédé selon la revendication 10, caractérisé en ce que la suspension homogène de chaux dans la liqueur refroidie a une concentration comprise entre 7 et 9 g de CaO par litre.

12. Procédé selon l'une quelconque des revendications 1 à 11 caractérisé en ce que le temps de mise en contact de la chaux avec la liqueur refroidie pour former une suspension maintenue agitée est compris entre 3 et 5 heures.

13. Procédé selon l'une quelconque des revendications 1 à 8 caractérisé en ce qu'après un temps de contact CaO/liqueur d'au moins 1 heure la phase solide de la suspension après filtration et essorage est mise au rebut alors que la phase liquide constituée par la liqueur appauvrie en oxalate est recyclée en mélange avec la fraction principale de liqueur non désoxalatée comme liqueur d'attaque du minerai de bauxite.

14. Procédé selon la revendication 1 caractérisé en ce que l'on ajoute préalablement dans la solution ou liqueur d'aluminate de sodium, lors d'une étape quelconque du cycle Bayer et de préférence avant décomposition, un polyélectrolyte anionique, si le seuil de sursaturation critique en oxalate de sodium de la liqueur prélevée n'excède pas 0,15 à 0,25% en poids de carbone oxalique par rapport à la soude caustique.

15. Procédé selon la revendication 14 caractérisé en ce que la quantité de polyélectrolyte anionique ajoutée est de l'ordre de 20 mg par litre de liqueur.

## Claims

1. A process for the removal of sodium oxalate from at least a fraction of the solution or liquor of sodium aluminate which is taken off in the Bayer cycle for the production of alumina from bauxite after the steps of decomposition and concentration of said liquor which is intended to be recycled as an alkaline liquor for attacking the bauxite ore, comprising precipitation of the dissolved sodium oxalate by means of an agent for destabilisation of the state of supersaturation of the sodium oxalate, then separation by filtration of the sodium oxalate which is precipitated in that way, characterised in that the agent for destabilisation of the state of supersaturation of the sodium oxalate, also acting as a filtration additive, which is brought into contact for more than one hour with the solution of sodium aluminate which is cooled at between 40°C and 60°C, is based on finely divided lime.

2. A process according to claim 1 characterised in that the destabilisation agent is lime with the addition of magnesia in a proportion not exceeding 40% by weight of the mixture which is formed in that way.

3. A process according to claim 1 characterised in that the destabilisation agent is quicklime.

4. A process according to claim 1 characterised in that the destabilisation agent is a milk of lime in which the concentration of CaO is between 100 and 300 g/litre.

5. A process according to claim 1 characterised in that the solution or liquor of sodium aluminate which is taken off after decomposition and concentration is of a concentration of caustic soda expressed as Na₂O of between 170 and 250 g/l.

6. A process according to claim 5, characterised in that the solution of sodium aluminate which is taken off after decomposition and concentration is of a concentration of caustic soda expressed as Na₂O of between 190 and 210 g/l.

7. A process according to claim 1 or claim 6 characterised in that the solution or liquor of sodium aluminate which is taken off after decomposition and concentration has a proportion of sodium oxalate expressed by the ratio by weight of oxalic carbon/caustic Na₂O of between 0.3% and 0.6%.

8. A process according to any one of claims 1, 5, 6, 7 characterised in that the fraction of concentrated liquor taken off represents from 3 to 20% of the total volume of concentrated liquor.

9. A process according to claim 8, characterised in that the fraction of concentrated liquor taken off represents from 4 to 6% of the total volume of the concentrated liquor.

10. A process according to any one of claims 1 to 9 characterised in that the homogenous suspension of lime in the cooled liquor is of a concentration of between 2 and 20 g per litre.

11. A process according to claim 10, characterised in the homogenous suspension of lime in the cooled liquor is of a concentration of between 7 and 9 g of CaO per litre.

12. A process according to any one of claims 1 to 11 characterised in that the time involving contact of the lime with the cooled liquor for forming a suspension which is maintained in an agitated state is preferably between 3 and 5 hours.

13. A process according to any one of claims 1 to 8 characterised in that after a CaO/liquor contact time of at least 1 hour the solid phase of the suspension after filtration and drying is discarded while the liquid phase which is formed by the liquor with the reduced oxalate content is recycled mixed with the main fraction of non-de-oxalated liquor as the bauxite ore attack liquor.

14. A process according to claim 1 characterised in that an anionic polyelectrolyte is previously added to the solution or liquor of sodium aluminate in any step in the Bayer cycle and preferably prior to decomposition, if the critical supersaturation threshold in respect of sodium oxalate in the liquor which is taken off does not exceed 0.15 to 0.25% by weight of oxalic carbon with respect to the caustic soda.

15. A process according to claim 14 characterised in that the amount of anionic polyelectrolyte added is of the order of 20 mg per litre of liquor.

## Patentansprüche

1. Verfahren zur Entfernung von Natriumoxalat aus mindestens einem Bruchteil der aus dem Bayer-Prozeß zur Aluminiumoxiderzeugung aus Bauxit entnommenen Natriumaluminatlösung oder -lauge nach den Stufen der Zersetzung und der Konzentration der Lösung, die als alkalische Aufschlußlösung von Bauxiterz wiederverwertet werden soll, durch Abscheidung des gelösten Natriumoxalats mittels eines Destabilisierungsmittels des Übersättigungszustands des Natriumoxalats, durch anschließende Trennung mittels Filtration des auf diese Weise abgeschiedenen Natriumoxalats, dadurch gekennzeichnet, daß das ebenfalls als Filtrationshilfsmittel dienende Destabilisierungsmittel des Übersattigungszustands des Natriumoxalats, das während mehr als einer Stunde mit der zwischen 40°C und 60°C abgekühlten Natriumaluminatlösung in Kontakt gebracht wird, auf fein zerteiltem Kalk basiert.

2. Verfahren nach Anspruch 1, dadurch gekennzeichnet, daß das Destabilisierungsmittel Kalk ist, der mit Magnesiumoxid in einem Verhältnis versetzt ist, das 40 Gew.% des somit gebildeten Gemisches nicht überschreitet.

3. Verfahren nach Anspruch 1, dadurch gekennzeichnet, daß das Destabilisierungsmittel gebrannter Kalk ist.

4. Verfahren nach Anspruch 1, dadurch gekennzeichnet, daß das Destabilisierungsmittel eine Kalkmilch ist, deren Konzentration an CaO zwischen 100 und 300 g/l beträgt.

5. Verfahren nach Anspruch 1, dadurch gekennzeichnet, daß die nach der Zersetzung und der Konzentration entnommene Natriumaluminatlösung oder -lauge eine Konzentration von Ätznatron, ausgedrückt in Na₂O, aufweist, die zwischen 170 und 250 g/l beträgt.

6. Verfahren nach Anspruch 5, dadurch gekennzeichnet, daß die nach der Zersetzung und der Konzentration entnommene Natriumaluminatlösung eine Konzentration von Ätznatron, ausgedrückt in Na₂O, aufweist, die zwischen 190 und 210 g/l beträgt.

7. Verfahren nach Anspruch 1 oder 6, dadurch gekennzeichnet, daß die nach der Zersetzung und der Konzentration entnommene Natriumaluminatlösung oder -lauge einen durch das Gewichtsverhältnis Oxalkohlenstoff/Ätz-Na₂O ausgedrückten Natriumoxalatgehalt aufweist, der zwischen 0,3 % und 0,6 % liegt.

8. Verfahren nach einem der Ansprüche 1, 5, 6 oder 7, dadurch gekennzeichnet, daß der Bruchteil der entnommenen konzentrierten Lösung 3-20 % des Gesamtvolumens der konzentrierten Lösung darstellt.

9. Verfahren nach Anspruch 8, dadurch gekennzeichnet, daß der Bruchteil der entnommenen konzentrierten Lösung 4-6 % des Gesamtvolumens der konzentrierten Lösung darstellt

10. Verfahren nach einem der Ansprüche 1 bis 9, dadurch gekennzeichnet, daß die homogene Kalksuspension in der abgekühlten Lösung eine Konzentration zwischen 2 und 20 g aufweist.

11. Verfahren nach Anspruch 10, dadurch gekennzeichnet, daß die homogene Kalksuspension in der abgekühlten Lösung eine Konzentration zwischen 7 und 9 g CaO je Liter aufweist.

12. Verfahren nach einem der Ansprüche 1 bis 11, dadurch gekennzeichnet, daß die Kontaktzeit zwischen dem Kalk und der abgekühlten Lösung, um eine in Bewegung gehaltene Suspension zu bilden, zwischen 3 und 5 Stunden beträgt.

13. Verfahren nach einem der Ansprüche 1 bis 8, dadurch gekennzeichnet, daß nach einer Kontaktzeit CaO/Lösung von mindestens einer Stunde die Feststoff-Phase der Suspension nach Filtration und Absaugen weggeworfen wird, während die aus der oxalatverarmten Lösung bestehende Flüssigphase, mit dem Hauptbruchteil der Lösung vermischt, welcher kein Oxalat entzogen wurde, als Aufschlußlösung des Bauxiterzes wiederverwertet wird.

14. Verfahren nach Anspruch 1, dadurch gekennzeichnet, daß der Natriumaluminatlösung oder -lauge vorher, während einer beliebigen Stufe des Bayer-Prozesses und vorzugsweise vor der Zersetzung ein anionischer Polyelektrolyt beigemischt wird, wenn die kritische Schwelle der Übersättigung an Natriumoxalat in der entnommenen Lösung nicht 0,15-0,25 Gew.% des Oxalkohlenstoffes im Verhältnis zum Ätznatron überschreitet.

15. Verfahren nach Anspruch 14, dadurch gekennzeichnet, daß die Menge des zugesetzten anionischen Polyelektrolyts in der Größenordnung von 20 mg je Liter der Lösung beträgt.
